# EUROPEAN PATENT SPECIFICATION

(11) **EP 1 207 284 B1**
(45) Date of publication and mention of the grant of the patent: **15.12.2004**
(21) Application number: 01121463.2
(22) Date of filing: 07.09.2001
(51) Int. Cl.: F02B 27/00, F02M 35/116, F02B 75/24

(54) **Intake system for horizontal opposed type internal combustion engine**
Einlasssystem für eine Boxerbrennkraftmaschine
Système d' admission pour un moteur horizontal avec des cylindres opposés

(30) Priority: 16.11.2000 JP 2000349948
(43) Date of publication of application: 22.05.2002
(73) Proprietor: Honda Giken Kogyo Kabushiki Kaisha, Minato-ku, Tokyo (JP)
(72) Inventor: Fukuzawa, Kazuto, K. K. Honda Gijutsu Kenkyusho, Wako-shi, Saitama (JP); Sanada, Makoto, K. Kaisha Honda Gijutsu Kenkyusho, Wako-shi, Saitama (JP); Matsuda, Minoru, K. Kaisha Honda Gijutsu Kenkyusho, Wako-shi, Saitama (JP)
(74) Representative: Liska, Horst, Dr.-Ing.

(56) References cited:
- DE-A- 3 633 929
- DE-A- 4 032 321
- US-A- 2 311 146
- US-A- 4 922 864
- PATENT ABSTRACTS OF JAPAN vol. 018, no. 283 (M-1613), 30 May 1994 (1994-05-30) & JP 06 050184 A (FUJI HEAVY IND LTD), 22 February 1994 (1994-02-22)

## Description

The present invention relates to a horizontal opposed type internal combustion engine according to the preamble of claim 1.

A horizontal opposed type internal combustion engine according to the preamble of claim 1 is known from US-A-4 922 864.

As an intake system for horizontal opposed type internal combustion engine according to the prior art, there has been widely embodied one in which branch pipes of an intake manifold extending vertically as a whole are connected to intake ports opening at top surfaces of head portions of first and second banks, an evaporator or a throttle body is connected to a distribution chamber provided at an upper portion of the intake manifold, and an air cleaner is connected thereto.

However, since the intake system as above-described is constructed concentrated on the upper side of the first and second banks, the overall height of the engine is increased. This reduces the intrinsic merit of the horizontal opposed type internal combustion engine such that the overall height of the engine can be made small by arranging the first and second banks horizontally.

The present invention has been made in view of the above-mentioned point. It is therefore an object of the present invention to provide an intake system for horizontal opposed type internal combustion engine which can obviate the damage to the above-mentioned intrinsic merit of the horizontal opposed type internal combustion engine, and can contribute to improvement in output performance of the engine.

This object is achieved by a horizontal opposed type internal combustion engine according to claim 1. According to the present invention, in a horizontal opposed type internal combustion engine comprising a first bank and a second bank horizontally disposed opposite to each other with a crank shaft therebetween, first and second intake ports are provided at head portions of the first and second banks, a side wall on the crank shaft side of an air cleaner disposed horizontally adjacent to and on one end side of the crank shaft is provided with first and second intake distribution ports corresponding to the first and second intake ports and arranged horizontally, the first and second intake ports and the first and second intake distribution ports are connected respectively to each other through first and second intake pipes disposed along a top surface or a bottom surface of the engine, and throttle valves for controlling intake quantities in the first and second intake pipes are provided in respective upstream portions of the intake pipes.

According to the first feature, even distribution of air into the first and second intake pipes is achieved in the air cleaner, and the distributed air is supplied individually into first and second cylinders. As a result, interference of intake between the cylinders is restrained, while charging efficiency can be enhanced, and an improvement in output performance of the engine can be contrived.

Moreover, the air cleaner disposed horizontally adjacent to and on the rear end side of the crank shaft and the first and second intake pipes arranged along a top surface or bottom surface of the engine do not have large influence on the overall height of the engine, and, therefore, it is possible to retain the intrinsic merit of the horizontal opposed type internal combustion engine such that the overall height of the engine can be made small.

In addition to the first feature, the present invention is secondly characterized in that the first and second banks comprise pluralities of first and second cylinders and pluralities of the first and second intake ports corresponding to the first and second cylinders, pluralities of the first and second intake distribution ports provided in the air cleaner correspondingly to the first and second intake ports are arranged symmetrically with respect to a center line extending in the vicinity of and in parallel with the crank shaft, the first and second intake ports nearer to the air cleaner and the first and second intake distribution ports located on the inner side and nearer to the center line are connected respectively to each other through the first and second intake pipes, the first and second intake ports farther from the air cleaner and the first and second intake distribution ports located on the outer side and farther from the center line are connected respectively to each other through the first and second intake pipes, and valve shafts of the throttle valves provided in the upstream portions of the first and second intake pipes are connected coaxially with each other.

According to the second characteristic feature, although the distances from the front-side and rear-side intake ports to the air cleaner differ in each of the banks, evening of the effective pipe lengths of the first intake pipes and evening of the effective pipe lengths of the second intake pipes can be contrived, and inertia effects and pulsation effects of intake can be evenly displayed in each of the intake pipes. As a result, charging efficiency for the cylinders can be enhanced effectively, and a further improvement in output performance can be contrived.

Further, in addition to the first characteristic feature, the present invention is thirdly characterized in that the first and second banks comprise pluralities of the first and second cylinders and pluralities of the first and second intake ports corresponding to the first and second cylinders, pluralities of the first and second intake distribution ports provided in the air cleaner correspondingly to the first and second intake ports are arranged symmetrically with respect to the center line extending in the vicinity of and in parallel with the crank shaft, the first and second intake ports nearer to the air cleaner and the first and second intake distribution ports located on the outer side and farther from the center line are connected respectively to each other through the first and second intake pipes, the first and second intake ports farther from the air cleaner and the first and second intake distribution ports located on the inner side and nearer to the center line are connected respectively to each other through the first and second intake pipes, and the throttle valves provided in the upstream portions of the first and second intake pipes connected to the first and second outer-side intake distribution ports are arranged nearer to the air cleaner as compared to the throttle valves provided in the upstream portions of the first and second intake pipes connected to the first and second inner-side intake distribution ports.

According also to the third characteristic feature, evening of the effective pipe lengths of the first intake pipes and evening of the effective pipe lengths of the second intake pipes can be contrived, and inertia effects and pulsation effects of intake in each of the intake pipes can be displayed more evenly. As a result, charging efficiency for each of the cylinders can be enhanced effectively, and a further improvement in output performance can be contrived.

Further, in addition to the third characteristic feature, the present invention is fourthly characterized in that the valve shafts of the throttle valves nearer to the air cleaner are connected coaxially with each other, and the valve shafts of the throttle valves farther from the air cleaner are connected coaxially with each other.

According to the fourth characteristic feature, the valve shaft of the throttle valves nearer to the air cleaner and the valve shaft of the throttle valves farther from the air cleaner can be arranged parallel with each other.

Further, in addition to the third characteristic feature, the present invention is fifthly characterized in that the valve shafts of the throttle valves in the first intake pipes are connected coaxially with each other, and the valve shafts of the throttle valves in the second intake pipes are connected coaxially with each other.

According to the fifth characteristic feature, interchangeability between the valve shaft of the throttle valves nearer to the air cleaner and the valve shaft of the throttle valves farther from the air cleaner can be contrived.

Furthermore, in addition to any one of the first to fifth characteristic features, the present invention is sixthly characterized in that the first bank is set off from the second bank to the opposite side of the air cleaner along the axis line of the crank shaft, and the center line is set off from the axis line of the crank shaft to the side of the first bank.

According to the sixth characteristic feature, the difference between the lengths of the first intake pipe and the second intake pipe due to offset of the first and second banks from each other can be reduced, which contributes to evening of the effective pipe lengths of the first and second intake pipes.

Modes for carrying out the invention will now be described bellow referring to some embodiments of the invention illustrated by the attached drawings.

It is illustrated in:
Fig. 1
   a plan view of a horizontal opposed type internal combustion engine comprising an intake system according to a first embodiment of the invention.
Fig. 2
   a side view of the internal combustion engine.
Fig. 3
   a plan view of a horizontal opposed type internal combustion engine comprising an intake system according to a second embodiment of the invention.
Fig. 4
   a plan view of a horizontal opposed type internal combustion engine comprising an intake system according to a third embodiment of the invention.

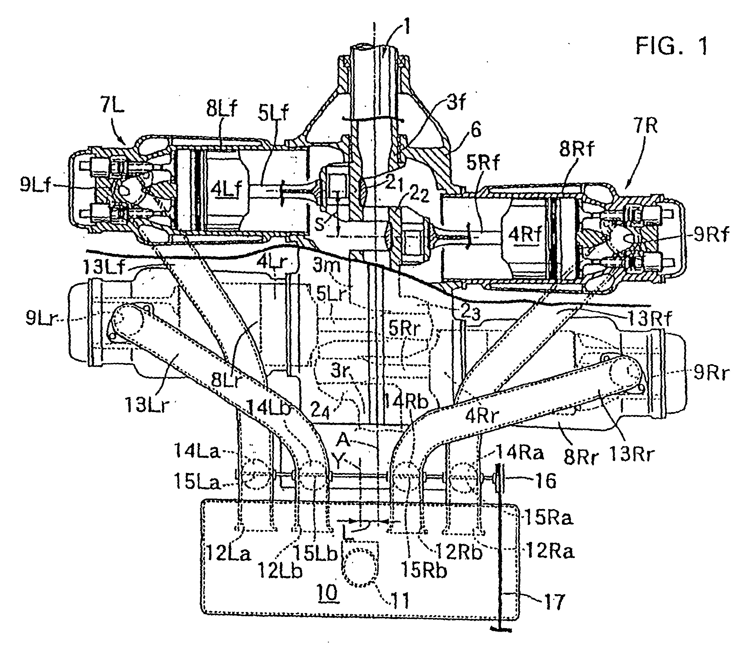

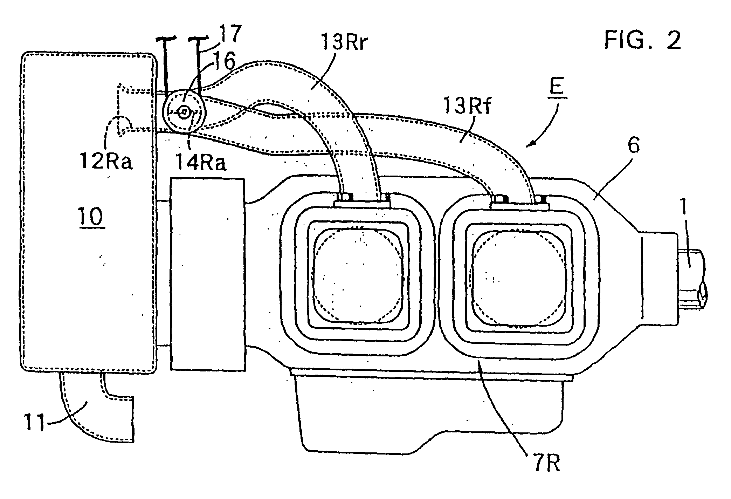

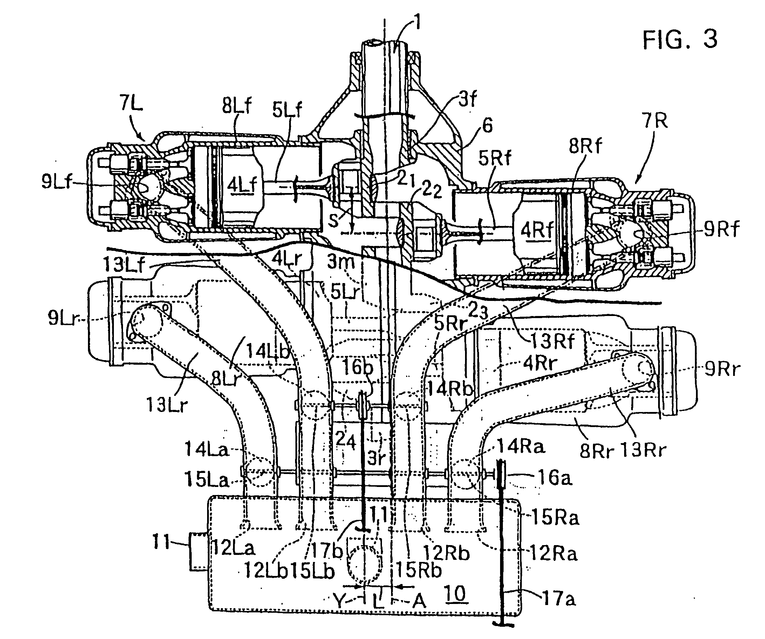

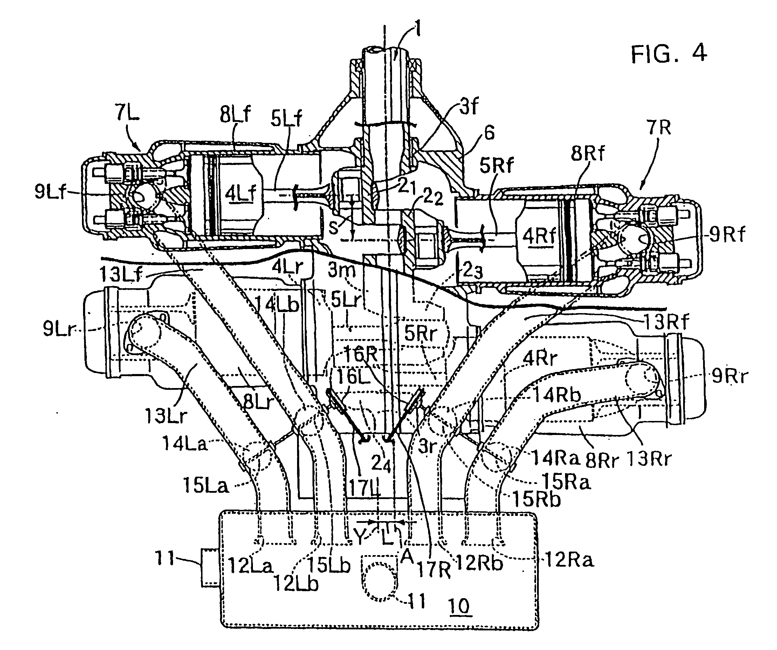

Fig. 1 is a plan view of a horizontal opposed type internal combustion engine comprising an intake system according to a first embodiment of the invention; Fig. 2 is a side view of the internal combustion engine; Fig. 3 is a plan view of a horizontal opposed type internal combustion engine comprising an intake system according to a second embodiment of the invention; and Fig. 4 is a plan view of a horizontal opposed type internal combustion engine comprising an intake system according to a third embodiment of the invention.

First, the first embodiment of the invention shown in Figs. 1 and 2 will be described. In Fig. 1, symbol E denotes a horizontal opposed type 4-cylinder internal combustion engine for vehicle to which the invention has been applied. In the internal combustion engine E, a crank shaft 1 is disposed in the front-rear direction of the vehicle. The crank shaft 1 comprises No. 1 crank 2₁, No. 2 crank 2₂, No. 3 crank 2₃, and No. 4 crank 2₄. The No. 1 crank 2₁ and No. 4 crank 2₄ as well as the No. 2 crank 2₂ and No. 3 crank 2₃ are respectively in the same phase with each other, and there is a phase difference of 180° between the No. 1 and No. 4 cranks 2₁, 2₄ and the No. 2 and No. 3 cranks 2₂, 2₃. A front-rear pair of first pistons 4Lf, 4Lr are respectively connected to the No. 1 and No. 3 cranks 2₁, 2₄ through connecting rods 5Lf, 5Lr, and a front-rear pair of second pistons 4Rf, 4Rr are respectively connected to the No. 2 and No. 4 cranks 2₂, 2₄ through connecting rods 4Rf, 4Rr. The first pistons 4Lf, 4Lr and the second pistons 4Rf, 4Rr are disposed opposite to each other on the left and right sides with the axis line A of the crank shaft 1 therebetween. The first pistons 4Lf, 4Lr are set off from the second pistons 4Rf, 4Rr to the front side along the crank axis line A by an axial distance S between the No. 1 crank 2₁ and No. 2 crank 2₂ and between the No. 3 crank 2₃ and No. 4 crank 2₄. The offset distance S corresponds to the offset distance between the first and second banks 7L, 7R, which will be described later.

The crank shaft 1 is provided with a front journal 3f adjacent to and on the front side of the No. 1 crank 2₁, a middle journal 3m at a middle portion between the No. 2 and No. 3 cranks 2₂, 2₃, and a rear journal 3r adjacent to and on the rear side of the No. 4 crank 2₄. These journals 3f, 3m, 3r are rotatably supported by a crankcase 6.

On the left and right sides of the crankcase 6 are adjacently disposed the first and second banks 7L, 7R horizontally opposite to each other with the crank shaft 1 therebetween. The first and second banks 7L, 7R comprise front-rear pairs of first and second cylinders 8Lf, 8Lr and 8Rf, 8Rr. The first pistons 4Lf, 4Lr are fitted in the first cylinders 8Lf, 8Lr, while the second pistons 4Rf, 4Rr are fitted in the second cylinders 8Rf, 8Rr.

At head portions of the first and second banks 7L, 7R, first and second intake ports 9Lf, 9Lr and 9Rf, 9Rr corresponding to the respective cylinders 8Lf, 8Lr and 8Rf, 8Rr are provided to be opened at top surfaces of the head portions.

As shown in Figs. 1 and 2, on the rear side of the crankcase 6 is disposed an air cleaner 10 horizontally adjacent to the rear end of the crank shaft 1. The air cleaner 10 has the shape of a box elongate in the left-right direction. A bottom wall of the air cleaner 10 is provided with an air inlet 11. A front wall of the air cleaner 10 on the side of the crankcase 6 is provided with first and second intake distribution ports 12Lf, 12Lr and 12Rf, 12Rr corresponding to the first and second intake ports 9Lf, 9Lr and 9Rf, 9Rr of the first and second banks 7L, 7R. The first and second intake distribution ports 12Lf, 12Lr and 12Rf, 12Rr are disposed horizontally and symmetrically on the left and right sides of a center line Y parallel to the crank shaft 1, and are shaped like funnels opening into the air cleaner 10.

The center line Y is set off from the axis line A of the crank shaft 1 to the side of the first bank 7L by a distance L which corresponds to the frontward offset distance S of the first bank 7L relative to the second bank 7R.

The first and second rear-side intake ports 9Lr, 9Rr nearer to the air cleaner 10 and the first and second inner-side intake distribution ports 12Lb, 12Rb nearer to the center line Y are connected respectively to each other through first and second intake pipes 13Lr, 13Rr. The first and second front-side intake ports 9Lf, 9Rf farther from the air cleaner 10 and the first and second outer-side intake distribution ports 12La, 12Ra farther from the center line Y are connected respectively to each other through first and second intake pipes 13Lf, 13Rf. The first intake pipes 13Lf, 13Lr cross each other at an intermediate part, while the second intake pipes 13Rf, 13Rr also cross each other at an intermediate part. The first and second intake pipes 13Lr, 13Rr are disposed as a whole along a top surface of the engine E.

At upstream portions of the first and second intake pipes 13Lf, 13Lr and 13Rf, 13Rr, butterfly-type throttle valves 14La, 14Lb and 14Ra, 14Rb for individual control of intake quantities in the intake pipes are disposed in the direction of arrangement of the first and second intake distribution ports 12Lf, 12Lr and 12Rf, 12Rr. Valve shafts 15La, 15Lb and 15Ra, 15Rb of the throttle valves 14La, 14Lb and 14Ra, 14Rb are connected coaxially with each other. In the case shown in the figures, the valve shafts are composed of a long common single valve shaft, and a throttle drum 16 connected with an operating wire 17 is attached to one end of the common valve shaft.

Now, the operation or effects of the first embodiment will be described below.

In operation of the engine E, even distribution of air into the first and second intake pipes 13Lf, 13Lr and 13Rf, 13Rr is carried out in the air cleaner 10, and the distributed air is supplied individually into the first and second cylinders 8Lf, 8Lr and 8Rf, 8Rr. By this, interference of intake among the cylinders 8Lf, 8Lr and 8Rf, 8Rr can be prevented, while charging efficiency can be enhanced.

Especially, the first and second rear-side intake ports 9Lr, 9Rr nearer to the air cleaner 10 and the first and second inner-side intake distribution ports 12Lb, 12Rb nearer to the center line Y are respectively connected to each other through the first and second intake pipes 13Lr, 13Rr, whereas the first and second front-side intake ports 9Lf, 9Rf farther from the air cleaner 10 and the first and second outer-side intake distribution ports 12La, 12Ra farther from the center line Y are respectively connected to each other through the first and second intake pipes 13Lf, 13Rf. In addition, in upstream portions of the first and second intake pipes 13Lf, 13Lr and 13Rf, 13Rr are disposed throttle valves 14La, 14Lb and 14Ra, 14Rr arranged in the arrangement direction of the first and second intake distribution ports 12Lf, 12Lr and 12Rf, 12Rr. Therefore, although the distances between the front-side and rear-side intake ports 9Lf, 9Lr and 9Rf, 9Rr and the air cleaner 10 differ in each of the banks 7L, 7R, evening of the effective pipe lengths of the first intake pipes 13L, 13Lr and evening of the effective pipe lengths of the second intake pipes 13Rf, 13Rr can be contrived.

Furthermore, since the first and second intake distribution ports 12Lf, 12Lr and 12Rf, 12Rr are as a whole set off to the side of the first bank 7L by a distance L which corresponds to the frontward offset distance S of the first bank 7L relative to the second bank 7R, the pipe length difference between the first intake pipes 13Lf, 13Lr and the second intake pipes 13Rf, 13Rr due to the offset of the first and second banks 7L, 7R from each other can'be reduced.

As a result, inertia effects and pulsation effects of intake can be evenly displayed in each of the intake pipes 13Lf, 13Lr and 13Rf, 13Rr, charging efficiency for each of the cylinders 8Lf, 8Lr and 8Rf, 8Rr can be effectively enhanced, and an improvement in engine output can be contrived.

Moreover, since the air cleaner 10 is disposed at the rear end of and horizontally adjacent to the crank shaft 1 while the first and second intake pipes 13Lf, 13Lr and 13Rf, 13Rr connecting the air cleaner 10 to the first and second intake ports 9Lf, 9Lr and 9Rf, 9Rr opening at top surfaces of head portions of the first and second banks 7L, 7R are laid along the top surface of the engine E, these intake pipes 13Lf, 13Lr and 13Rf, 13Rr and the air cleaner 10 are prevented from making a great effect on the overall height of the engine. Therefore, it is possible to make the most of the intrinsic merit.of the horizontal opposed type internal combustion engine E such that the overall height of the engine can be made small.

Next, a second embodiment of the invention illustrated by Fig. 3 will be described.

In the second embodiment, first and second intake ports 9Lr, 9Rr nearer to an air cleaner 10 and first and second outer-side intake distribution ports 12La, 12Ra farther from a center line Y in the air cleaner 10 are respectively connected to each other through first and second intake pipes 13Lr, 13Rr, whereas first and second intake ports 9Lf, 9Rf farther from the air cleaner 10 and first and second inner-side intake distribution ports 12Lb, 12Rb nearer to the center line Y are respectively connected to each other through first and second intake pipes 13Lf, 13Rf. In addition, throttle valves 14La, 14Ra provided in upstream portions of the first and second intake pipes 13Lr, 13Rr connected to the first and second outer-side intake distribution ports 12La, 12Ra are disposed nearer to the air cleaner 10 as compared with throttle valves 14Lb, 14Rb provided in upstream portions of the first and second intake pipes 13Lf, 13Rf connected to the first and second inner-side intake distribution ports 12Lb, 12Rb. Valve shafts 15La, 15Ra of the rear-side throttle valves 14La, 14Ra are connected coaxially with each other so as to pierce through the first and second inner-side intake pipes 13Lf, 13Rf. In the embodiment illustrated,'the valve shafts are composed of a long common single valve shaft, and a throttle drum 16a connected to an operating wire 17a is attached to one end of the common valve shaft. Valve shafts 15Lb, 15Rb of the front-side throttle valves 14Lb, 14Rb are connected coaxially with each other. In the embodiment illustrated, the valve shafts are composed of a long common single valve shaft, and a throttle drum 16b connected to an operating wire 17b is attached to an intermediate portion of the common valve shaft. Both the operating wires 17a, 17b are connected to a common throttle operating member, not shown, so that they are operated simultaneously. Meanwhile, where the front-side and rear-side valve shafts 15Lb, 15Rb and 15La, 15Ra are connected to each other through a link mechanism, it suffices that the operating system is provided only for either one valve shaft 15Lb, 15Rb or 15La, 15Ra.

Other aspects of constitution are the same as in the first embodiment; therefore, the same reference symbols are used for the same component parts in Fig. 3 as in the first embodiment, and description of such component parts is omitted.

According to the second embodiment also, the effective pipe lengths of the intake pipes 13Lf, 13Rf connecting the front-side intake ports 9Lf, 9Rf to the front-side throttle valves 14Lb, 14Rb and the effective pipe lengths of the intake pipes 13Lr, 13Rr connecting the rear-side intake ports 9Lr, 9Rr to the rear-side throttle valves 14La, 14Ra can be made more even in each of the banks 7L, 7R, and inertia effects and pulsation effects of intake in each of the intake pipes 13Lf, 13Lr and 13Rf, 13Rr can be equalized. By this, charging efficiency for each of the cylinders 8Lf, 8Lr and 8Rf, 8Rr can be enhanced effectively, and an improvement in engine output can be contrived. Besides, in the above-mentioned constitution, the rear-side valve shafts 15La, 15Ra nearer to the air cleaner 10 and the front-side valve shafts 15Lb, 15Rb farther from the air cleaner 10 can be disposed in parallel to each other.

Finally, a third embodiment of the invention illustrated by Fig. 4 will be described.

The third embodiment differs from the second embodiment of Fig. 3 only in the arrangement of valve shafts 15La, 15Lb and 15Ra, 15Rb of throttle valves 14La, 14Lb and 14Ra, 14Rb; therefore, the different points will only be described. Namely, valve shafts 15La, 15Lb of throttle valves 14La, 14Lb disposed in a front-rear relationship on the side of the first bank 7L are connected coaxially with each other. In the embodiment illustrated, the valve shafts are composed of a long common single valve shaft, and a throttle drum 16L connected to an operating wire 17L is attached to one end of the common valve shaft.

In addition, valve shafts 15Ra, 15Rb of throttle valves 14Ra, 14Rb disposed in a front-rear relationship on the side of the second bank 7R are connected coaxially with each other. In the embodiment illustrated, the valve shafts are composed of a long common single valve shaft, and a throttle drum 16R connected to an operating wire 17R is attached to one end of the common valve shaft.

As a result of the above constitution, the valve shafts 15La, 15Lb of the throttle valves 14La, 14Lb on the side of the first bank 7L and the valve shafts 15Ra, 15Rb of the throttle valves 14Ra, 14Rb on the side of the second bank 7R are arranged in a truncated reverse V shape in plan view. Both of the operating wires 17L, 17R mentioned above are connected to a common throttle operating member, not shown, so that they are operated simultaneously. Meanwhile, where the left and right valve shafts 15La, 15Lb and 15Ra, 15Rb are connected to each other through a flexible joint, it suffices that the operating system is provided only for either one valve shaft 15La, 15Lb or 15Ra, 15Rb.

According to the above constitution, it is possible to contrive interchangeability between the valve shaft 15La, 15Lb of the throttle valves 14La, 14Lb on the side of the first bank 7L and the valve shaft 15Ra, 15Rb of the throttle valves 14Ra, 14Rb on the side of the second bank 7R. In addition, since the arrangement of the throttle valves 14La, 14Lb and 14Ra, 14Rb is the same as in the second embodiment, the same action or effects as in the second embodiment can be displayed.

In Fig. 4, the same reference symbols are used for the same component parts as in the second embodiment described above.

The present invention is not restricted to or by the above-mentioned embodiments, and various modifications in design can be made without stepping out of the gist of the invention. For instance, the first and second intake ports 9Lf, 9Lr and 9Rf, 9Rr can be opened at bottom surfaces of head portions of the first and second banks 7L, 7R, and the first and second intake pipes 13Lf, 13Lr and 13Rf, 13Rr can be disposed along a bottom surface of the engine E. In addition, the horizontal opposed type internal combustion engine according to the invention can be applied to internal combustion engines having 6 or more cylinders. Furthermore, by disposing the crank shaft along a center line of a vehicle, the horizontal opposed type internal combustion engine of the invention can effectively be applied not only to automobiles but also to motorcycles and airplanes.

According to the first characteristic feature of the invention as described above, in a horizontal opposed type internal combustion engine comprising first and second banks disposed horizontally and opposite to each other with a crank shaft therebetween, first and second intake ports are provided at head portions of the first and second banks, a side wall on the crank shaft side of an air cleaner disposed horizontally adjacent to and on one end side of the crank shaft is provided with first and second intake distribution ports corresponding to the first and second intake ports and arranged horizontally, the first and second intake ports and the first and second intake distribution ports are connected respectively to each other through first and second intake pipes disposed along a top surface or a bottom surface of the engine, and throttle valves for controlling intake quantities in the first and second intake pipes are provided in respective upstream portions of the intake pipes. With this construction, it is possible to prevent intake interference among the cylinders, to enhance charging efficiency, and contrive an improvement in output performance of the engine. In addition, since the air cleaner disposed horizontally adjacent to and at the rear end of the crank shaft and the first and second intake pipe disposed along the top surface or bottom surface of the engine do not have a great influence on the overall height of the engine, it is possible to retain the intrinsic merit of the horizontal opposed type internal combustion engine such that the overall height of the engine can be made small.

According to the second characteristic feature of the invention, first and second banks comprise pluralities of first and second cylinders and pluralities of first and second intake ports corresponding to the first and second cylinders, pluralities of first and second intake distribution ports provided in an air cleaner correspondingly to the first and second intake ports are arranged symmetrically with respect to a center line extending in the vicinity of and in parallel with the crank shaft, the first and second intake ports nearer to the air cleaner and the first and second intake distribution ports located on the inner side and nearer to the center line are connected respectively to each other through the first and second intake pipes, the first and second intake ports farther from the air cleaner and the first and second intake distribution ports located on the outer side and farther from the center line are connected respectively to each other through the first and second intake pipes, and valve shafts of throttle valves provided in upstream portions of the first and second intake pipes are connected coaxially with each other. As a result, although the distances between the front-side and rear-side intake ports and the air cleaner differ in each bank, evening of effective pipe lengths of the first intake pipes and evening of effective pipe lengths of the second intake pipes can be contrived, and inertia effects and pulsation effects of intake are equally displayed in each of the intake pipes. By this, it is possible to effectively enhance charging efficiency for each cylinder, and to contrive a further improvement of output performance.

According to the third characteristic feature of the invention, first and second banks comprise pluralities of first and second cylinders and pluralities of first and second intake ports corresponding to the first and second cylinders, pluralities of first and second intake distribution ports provided in the air cleaner correspondingly to the first and second intake ports are arranged symmetrically with respect to a center line extending in the vicinity of and in parallel with the crank shaft, the first and second intake ports nearer to the air cleaner and the first and second intake distribution ports located on the outer side and farther from the center line are connected respectively to each other through first and second intake pipes, the first and second intake ports farther from the air cleaner and the first and second intake distribution ports located on the inner side and nearer to the center line are connected respectively to each other through the first and second intake pipes, and throttle valves provided in upstream portions of the first and second intake pipes connected to the first and second outer-side intake distribution ports are arranged nearer to the air cleaner as compared to throttle valves provided in upstream portions of the first and second intake pipes connected to the first and second inner-side intake distribution ports. In this case, also, evening of effective pipe lengths of the first intake pipes and evening of effective pipe lengths of the second intake pipes can be contrived, and inertia effects and pulsation effects of intake are equally displayed in each of the intake pipes. By this, it is possible to effectively enhance charging efficiency for each cylinder, and to contrive a further improvement of output performance.

Further, according to the third characteristic feature of the invention, valve shafts of the throttle valves nearer to the air cleaner are connected coaxially with each other, and valve shafts of throttle valves farther from the air cleaner are connected coaxially with each other. Therefore, it is possible to arrange in parallel the valve shafts of the throttle valves nearer to the air cleaner and the valve shafts of the throttle valves farther from the air cleaner.

According to the fourth characteristic feature of the invention, valve shafts of the throttle valves in the first intake pipes are connected coaxially with each other, and valve shafts of the throttle valves in the second intake pipes are connected coaxially with each other. With this construction, it is possible to contrive interchangeability between the valve shafts of the throttle valves in the first intake pipe and the valve shafts of the throttle valves in the second intake pipe.

Furthermore, according to the sixth characteristic feature of the invention, the first bank is set off from the second bank to the opposite side of the air cleaner along the axis line of the crank shaft, and the above-mentioned center line is set off from the axis line of the crank shaft to the side of the first bank. With this arrangement, it is possible to reduce pipe length difference between the first intake pipes and the second intake pipes due to the offset of the first and second banks from each other, and to contribute to evening of effective pipe lengths of the intake pipes.

In summary it is an object to provide an intake system for horizontal opposed type internal combustion engine which can contribute to improvement of output performance without sacrificing the intrinsic merit of the horizontal opposed type internal combustion engine, namely, smaller overall height.
To achieve this, first and second intake ports 9Lf, 9Lr and 9Rf, 9Rr provided at head portions of first and second banks 7L, 7R arranged on the left and right sides and first and second intake distribution ports 12La, 12Lb and 12Ra, 12Rb arranged horizontally at a front wall of an intake surge tank 10 disposed on the rear end side of and adjacent to a crank shaft 1 are respectively connected with each other through first and second intake pipes 13Lf, 13Lr and 13Rf, 13Rr disposed along a top surface or bottom surface of the engine E. Throttle valves 14La, 14Lb and 14Ra, 14Rb for controlling intake quantities in the first and second intake pipes are provided in upstream portions of the intake pipes.

## Claims

1. A horizontal opposed type internal combustion engine with an intake system, said horizontal opposed type internal combustion engine comprising a first bank (7L) and a second bank (7R) horizontally disposed opposite to each other with a crank shaft (1) therebetween, wherein
first and second intake ports (9Lf, 9Lr; 9Rf, 9Rr) are provided at head portions of said first and second banks (7L, 7R),
an air cleaner (10) is provided, and
first and second intake distribution ports (12La, 12Lb; 12Ra, 12Rb) corresponding to said first and second intake ports (9Lf, 9Lr; 9Rf, 9Rr) and arranged horizontally are provided, wherein
said first and second intake ports (9Lf, 9Lr; 9Rf, 9Rr) and said first and second intake distribution ports (12La, 12Lb; 12Ra, 12Rb) are connected respectively to each other through first and second intake pipes (13Lf, 13Lr; 139Rf, 13Rr) disposed along a top surface or a bottom surface of the engine (E), and throttle valves (14La, 14Lb; 14Ra, 14Rb) for controlling intake quantities in said first and second intake pipes (13Lf, 13Lr; 13Rf, 13Rr) are provided in respective upstream portions of said intake pipes (13Lf, 13Lr; 13Rf, 13Rr),
**characterized in that**
a side wall on said crank shaft (1) side of said air cleaner (10) disposed horizontally adjacent to and on one end side of said crank shaft (1) is provided with said first and second intake distribution ports (12La, 12Lb; 12Ra, 12Rb)

2. A horizontal opposed type internal combustion engine with an intake system as set forth in claim 1, wherein
said first and second banks (7L, 7R) comprise pluralities of first and second cylinders (8Lf, 8Lr; 8Rf, 8Rr) and pluralities of said first and second intake ports (9Lf, 9Lr; 9Rf, 9Rr) corresponding to said first and second cylinders (BLf, 8Lr; 8Rf, 8Rr), pluralities of said first and second intake distribution ports (12La, 12Lb; 12Ra, 12Rb) provided in said air cleaner (10) correspondingly to said first and second intake ports (9Lf, 9Lr; 9Rf, 9Rr) are arranged symmetrically with respect to a center line (Y) extending in the vicinity of and in parallel with said crank shaft (1), said first and second intake ports ((9Lr, 9Rr) nearer to said air cleaner (10) and said first and second intake distribution ports (12Lb, 12Rb) located on the inner side and nearer to said center line (Y) are connected respectively to each other through said first and second intake pipes (13Lr, 13Rr), said first and second intake ports (9Lf, 99Rf) farther from said air cleaner (10) and said first and second intake distribution ports (12La, 12Ra) located on the outer side and farther from said center line (Y) are connected respectively to each other through said first and second intake pipes (13Lf, 13Rf), and valve shafts (15La, 15Lb; 15Ra, 15Rb) of said throttle valves (14La, 14Lb; 14Ra, 14Rb) provided in said upstream portions of said first and second intake pipes (13Lf, 134Lr; 13Rf, 13Rr) are connected coaxially with each other.

3. A horizontal opposed type internal combustion engine with an intake system as set forth in claim 1, wherein
said first and second banks (7L, 7R) comprise pluralities of said first and second cylinders (8Lf, 8Lr; 8Rf, 8Rr) and pluralities of said first and second intake ports (9Lf, 9Lr; 9Rf, 9Rr) corresponding to said first and second cylinders (8Lf, 8Lr; 8Rf, 8Rr), pluralities of said first and second intake distribution ports (12La, 12Lb; 12Ra, 12Rb) provided in said air cleaner (10) correspondingly to said first and second intake ports (9Lf, 9Lr; 9Rf, 9Rr) are arranged symmetrically with respect to said center line (Y) extending in the vicinity of and in parallel with said crank shaft (1), said first and second intake ports (9Lr, 9Rr) nearer to said air cleaner (10) and said first and second intake distribution ports (12La, 12Ra) located on the outer side and farther from said center line (Y) are connected respectively to each other through said first and second intake pipes (13Lr, 13Rr), said first and second intake ports (9Lf, 9Rf) farther from said air cleaner (10) and said first and second intake distribution ports (12Lb, 12Rb) located on the inner side and nearer to said center line (Y) are connected respectively to each other through said first and second intake pipes (13Lf, 13Rf), and said throttle valves (14La, 14Ra) provided in said upstream portions of said first and second intake pipes (13Lr, 13Rr) connected to said first and second outer-side intake distribution ports (12La, 12Ra) are arranged nearer to said air cleaner (10) as compared to said throttle valves (14Lb, 14Rb) provided in said upstream portions of said first and second intake pipes (13Lf, 13Rf) connected to said first and second inner-side intake distribution ports (12Lb, 12Rb).

4. A horizontal opposed type internal combustion engine with an intake system as set forth in claim 3, wherein
said valve shafts (15La, 15Ra) of said throttle valves (14La, 14Ra) nearer to said air cleaner (10) are connected coaxially with each other, and said valve shafts (15Lb, 15Rb) of said throttle valves (14Lb, 14Rb) farther from said air cleaner (10) are connected coaxially with each other.

5. A horizontal opposed type internal combustion engine with an intake system as set forth in claim 3, wherein
said valve shafts (15La, 15Lb) of said throttle valves (14La, 14Lb) in said first intake pipes (13Lf, 14Rb) are connected coaxially with each other, and said valve shafts (15Ra, 15Rb) of said throttle valves (14Ra, 1RLb) in said second intake pipes (13Rf, 13Rr) are connected coaxially with each other.

6. A horizontal opposed type internal combustion engine with an intake system as set forth in any one of claims 1 to 5, wherein
said first bank (7L) is set off (S) from said second bank (7R) to the opposite side of said air cleaner (10) along the axis line (A) of said crank shaft (1), and said center line (Y) is set off (L) from said axis line (A) of said crank shaft (1) to the side of said first bank (7L).

## Patentansprüche

1. Verbrennungsmotor vom Boxertyp mit einem Einlasssystem, wobei der Verbrennungsmotor vom Boxertyp eine erste Bank (7L) und eine zweite Bank (7R) umfasst, welche horizontal einander gegenüber mit einer Kurbelwelle (1) dazwischen angeordnet sind, wobei
erste und zweite Einlasskanäle (9Lf, 9Lr; 9Rf, 9Rr) in Kopfabschnitten der ersten und der zweiten Bank (7L, 7R) vorgesehen sind,
ein Luftfilter (10) vorgesehen ist, und
erste und zweite Einlassverteilungskanäle (12La, 12Lb; 12Ra, 12Rb) vorgesehen sind, welche den ersten und zweiten Einlasskanälen (9Lf, 9Lr; 9Rf, 9Rr) entsprechen und horizontal angeordnet sind, wobei
die ersten und zweiten Einlasskanäle (9Lf, 9Lr; 9Rf, 9Rr) und die ersten und zweiten Einlassverteilungskanäle (12La, 12Lb; 12Ra, 12Rb) jeweils miteinander durch erste und zweite Einlassrohre (13Lf, 13Lr; 13Rf, 13Rr) verbunden sind, welche längs einer Oberseite oder einer Unterseite des Motors (E) angeordnet sind, und Drosselventile (14La, 14Lb; 14Ra, 14Rb) zur Steuerung/Regelung der Ansaugmengen in den ersten und zweiten Einlassrohren (13Lf, 13Lr; 13Rf, 13Rr) in jeweiligen stromaufwärtigen Abschnitten der Einlassrohre (13Lf, 13Lr; 13Rf, 13Rr) vorgesehen sind,
**dadurch gekennzeichnet,**
**dass** eine Seitenwand auf der Seite der Kurbelwelle (1) des horizontal benachbart und an einer Endseite der Kurbelwelle (1) angeordneten Luftfilters (10) mit den ersten und zweiten Einlassverteilungskanälen (12La, 12Lb; 12Ra, 12Rb) versehen ist.

2. Verbrennungsmotor vom Boxertyp mit einem Einlasssystem nach Anspruch 1, wobei
die erste und die zweite Bank (7L, 7R) Vielzahlen von ersten und zweiten Zylindern (BLf, 8Lr; 8Rf, 8Rr) und Vielzahlen von den ersten und zweiten Einlasskanälen (9Lf, 9Lr; 9Rf, 9Rr) entsprechend den ersten und zweiten Zylindern (8Lf, 8Lr; 8Rf, 8Rr) umfassen, Vielzahlen von den ersten und zweiten Einlassverteilungskanälen (12La, 12Lb; 12Ra, 12Rb), welche in dem Luftfilter (10) entsprechend den ersten und zweiten Einlasskanälen (9Lf, 9Lr; 9Rf, 9Rr) vorgesehen sind, symmetrisch bezüglich einer Mittellinie (Y) angeordnet sind, welche sich in der Nähe von und parallel zu der Kurbelwelle (1) erstreckt, wobei die ersten und zweiten Einlasskanäle (9Lr, 9Rr) näher zu dem Luftfilter (10) und die ersten und zweiten Einlassverteilungskanäle (12Lb, 12Rb), welche auf der Innenseite und näher zu der Mittellinie (Y) angeordnet sind, jeweils miteinander durch die ersten und zweiten Einlassrohre (13Lr, 13Rr) verbunden sind und die ersten und zweiten Einlasskanäle (9Lf, 9Rf) entfernter von dem Luftfilter (10) und die ersten und zweiten Einlassverteilungskanäle (12La, 12Ra), welche an der Außenseite und entfernter von der Mittellinie (Y) angeordnet sind, jeweils miteinander durch die ersten und zweiten Einlassrohre (13Lf, 13Rf) verbunden sind und Ventilschäfte (15La, 15Lb; 15Ra, 15Rb) der Drosselventile (14La, 14Lb; 14Ra, 14Rb), welche in den stromaufwärtigen Abschnitten der ersten und zweiten Einlassrohre (13Lf, 13Lr; 13Rf, 13Rr) vorgesehen sind, koaxial miteinander verbunden sind.

3. Verbrennungsmotor vom Boxertyp mit einem Einlasssystem nach Anspruch 1, wobei
die erste und die zweite Bank (7L, 7R) Vielzahlen von den ersten und zweiten Zylindern (8Lf, 8Lr; 8Rf, 8Rr) und Vielzahlen von den ersten und zweiten Einlasskanälen (9Lf, 9Lr; 9Rf, 9Rr) entsprechend den ersten und zweiten Zylindern (8Lf, 8Lr; 8Rf, 8Rr) umfassen, Vielzahlen von den ersten und zweiten Einlassverteilungskanälen (12La, 12Lb; 12Ra, 12Rb), welche in dem Luftfilter (10) entsprechend den ersten und zweiten Einlasskanälen (9Lf, 9Lr; 9Rf, 9Rr) vorgesehen sind, symmetrisch bezüglich der Mittellinie (Y) angeordnet sind, welche sich in der Nähe von und parallel zu der Kurbelwelle (1) erstreckt, wobei die ersten und zweiten Einlasskanäle (9Lr, 9Rr) näher an dem Luftfilter (10) und die ersten und zweiten Einlassverteilungskanäle (12La, 12Ra), welche an der Außenseite und entfernter von der Mittellinie (Y) angeordnet sind, jeweils miteinander durch die ersten und zweiten Einlassrohre (13Lr, 13Rr) verbunden sind, die ersten und zweiten Einlasskanäle (9Lf, 9Rf) entfernter von dem Luftfilter (10) und die ersten und zweiten Einlassverteilungskanäle (12Lb, 12Rb), welche auf der Innenseite und näher zu der Mittellinie (Y) angeordnet sind, jeweils miteinander durch die ersten und zweiten Einlassrohre (13Lf, 13Rf) verbunden sind und die Drosselventile (14La, 14Ra), welche in den stromaufwärtigen Abschnitten der ersten und zweiten Einlassrohre (13Lr, 13Rr) vorgesehen sind, welche mit den ersten und zweiten außenseitigen Einlassverteilungskanälen (12La, 12Ra) verbunden sind, näher an dem Luftfilter (10) im Vergleich zu den Drosselventilen (14Lb, 14Rb) angeordnet sind, die in den stromaufwärtigen Abschnitten der ersten und zweiten Einlassrohre (13Lf, 13Rf) vorgesehen sind, welche mit den ersten und zweiten innenseitigen Einlassverteilungskanälen (12Lb, 12Rb) verbunden sind.

4. Verbrennungsmotor vom Boxertyp mit einem Einlasssystem nach Anspruch 3, wobei
die Ventilschäfte (15La, 15Ra) der Drosselventile (14La, 14Ra) näher an dem Luftfilter (10) koaxial miteinander verbunden sind und die Ventilschäfte (15Lb, 15Rb) der Drosselventile (14Lb, 14Rb) entfernter von dem Luftfilter (10) koaxial miteinander verbunden sind.

5. Verbrennungsmotor vom Boxertyp mit einem Einlasssystem nach Anspruch 3, wobei
die Ventilschäfte (15La, 15Lb) der Drosselventile (14La, 14Lb) in den ersten Einlassrohren (13Lf, 13Lr) koaxial miteinander verbunden sind und die Ventilschäfte (15Ra, 15Rb) der Drosselventile (14Ra, 14Rb) in den zweiten Einlassrohren (13Rf, 13Rr) koaxial miteinander verbunden sind.

6. Verbrennungsmotor vom Boxertyp mit einem Einlasssystem nach einem der Ansprüche 1 bis 5, wobei
die erste Bank (7L) von der zweiten Bank (7R) zu der entgegengesetzten Seite des Luftfilters (10) längs der Achslinie (A) der Kurbelwelle (1) versetzt ist und die Mittellinie (Y) von der Achslinie (A) der Kurbelwelle (1) zu der Seite der ersten Bank (7L) versetzt ist.

## Revendications

1. Moteur à combustion interne de type horizontal à cylindres opposés, muni d'un système d'admission, ledit moteur à combustion interne de type horizontal à cylindres opposés comportant une première rangée (7L) et une seconde rangée (7R) disposées horizontalement en étant opposées l'une à l'autre avec un vilebrequin (1) entre celles-ci,
des premiers et seconds orifices d'admission (9Lf, 9Lr ; 9Rf, 9Rr) étant fournis au niveau de parties de tête desdites première et seconde rangées (7L, 7R),
un filtre à air (10) étant fourni, et
des premiers et seconds orifices de distribution d'admission (12La, 12Lb ; 12Ra, 12Rb) qui correspondent auxdits premiers et seconds orifices d'admission (9Lf, 9Lr ; 9Rf, 9Rr) et agencés horizontalement étant fournis,
dans lequel lesdits premiers et seconds orifices d'admission (9Lf, 9Lr ; 9Rf, 9Rr) et lesdits premiers et seconds orifices de distribution d'admission (12La, 12Lb ; 12Ra, 12Rb) étant connectés respectivement les uns aux autres à travers des premiers et seconds tuyaux d'admission (13Lf, 13Lr ; 13Rf, 13Rr) disposés le long d'une surface supérieure ou d'une surface inférieure du moteur (E), et des soupapes d'étranglement (14La, 14Lb ; 14Ra, 14Rb) destinées à commander des quantités d'admission dans lesdits premiers et seconds tuyaux d'admission (13Lf, 13Lr ; 13Rf, 13Rr) étant fournies dans des parties amont respectives desdits tuyaux d'admission (13Lf, 13Lr ; 13Rf, 13Rr),
**caractérisé en ce que**
une paroi latérale du côté dudit vilebrequin (1) dudit filtre à air (10) disposé horizontalement adjacent à un premier côté d'extrémité dudit vilebrequin (1), et sur celui-ci, est munie desdits premiers et seconds orifices de distribution d'admission (12La, 12Lb ; 12Ra, 12Rb).

2. Moteur à combustion interne de type horizontal à cylindres opposés muni d'un système d'admission selon la revendication 1, dans lequel
lesdites première et seconde rangées (7L, 7R) comportent des pluralités de premiers et seconds cylindres (8Lf, 8Lr ; 8Rf, 8Rr) et des pluralités desdits premiers et seconds orifices d'admission (9Lf, 9Lr ; 9Rf, 9Rr) qui correspondent auxdits premiers et seconds cylindres (8Lf, 8Lr ; 8Rf, 8Rr), des pluralités desdits premiers et seconds orifices de distribution d'admission (12La, 12Lb ; 12Ra, 12Rb) agencés dans ledit filtre à air (10) en correspondance avec lesdits premiers et seconds orifices d'admission (9Lf, 9Lr ; 9Rf, 9Rr) sont agencés de manière symétrique par rapport à une ligne centrale (Y) s'étendant à proximité dudit vilebrequin (1), et parallèlement à celui-ci, lesdits premier et second orifices d'admission (9Lr, 9Rr) plus proches dudit filtre à air (10) et lesdits premier et second orifices de distribution d'admission (12Lb, 12Rb) positionnés sur le côté intérieur et plus proches de ladite ligne centrale (Y) sont connectés respectivement l'un à l'autre à travers lesdits premier et second tuyaux d'admission (13Lr, 13Rr), lesdits premier et second orifices d'admission (9Lf, 9Rf) plus éloignés dudit filtre à air (10) et lesdits premier et second orifices de distribution d'admission (12La, 12Ra) positionnés sur le côté extérieur et plus éloignés de ladite ligne centrale (Y) sont connectés respectivement l'un à l'autre à travers lesdits premier et second tuyaux d'admission (13Lf, 13Rf), et des arbres de soupape (15La, 15Lb ; 15Ra, 15Rb) desdites soupapes d'étranglement (14La, 14Lb ; 14Ra, 14Rb) agencées dans lesdites parties amont desdits premiers et seconds tuyaux d'admission (13Lf, 13Lr ; 13Rf, 13Rr) sont connectés coaxialement les uns aux autres.

3. Moteur à combustion interne de type horizontal à cylindres opposés muni d'un système d'admission selon la revendication 1, dans lequel lesdites première et seconde rangées (7L, 7R) comportent des pluralités desdits premiers et seconds cylindres (8Lf, 8Lr ; 8Rf, 8Rr) et des pluralités desdits premiers et seconds orifices d'admission (9Lf, 9Lr ; 9Rf, 9Rr) qui correspondent auxdits premiers et seconds cylindres (8Lf, 8Lr ; 8Rf, 8Rr), des pluralités desdits premiers et seconds orifices de distribution d'admission (12La, 12Lb ; 12Ra, 12Rb) agencés dans ledit filtre à air (10) en correspondance avec lesdits premiers et seconds orifices d'admission (9Lf, 9Lr ; 9Rf, 9Rr) sont agencés de manière symétrique par rapport à ladite ligne centrale (Y) s'étendant à proximité dudit vilebrequin (1), et parallèlement à celui-ci, lesdits premier et second orifices d'admission (9Lr, 9Rr) plus proches dudit filtre à air (10) et lesdits premier et second orifices de distribution d'admission (12La, 12Ra) positionnés sur le côté extérieur et plus éloignés de ladite ligne centrale (Y) sont connectés respectivement l'un à l'autre à travers lesdits premier et second tuyaux d'admission (13Lr, 13Rr), lesdits premier et second orifices d'admission (9Lf, 9Rf) plus éloignés dudit filtre à air (10) et lesdits premier et second orifices de distribution d'admission (12Lb, 12Rb) positionnés sur le côté intérieur et plus proches de ladite ligne centrale (Y) sont connectés respectivement l'un à l'autre à travers lesdits premier et second tuyaux d'admission (13Lf, 13Rf), et lesdites soupapes d'étranglement (14La, 14Ra) agencées dans lesdites parties amont desdits premier et second tuyaux d'admission (13Lr, 13Rr) connectés auxdits premier et second orifices de distribution d'admission côté extérieur (12La, 12Ra) sont agencées plus proches dudit filtre à air (10) par comparaison auxdites soupapes d'étranglement (14Lb, 14Rb) agencées dans lesdites parties amont desdits premier et second tuyaux d'admission (13Lf, 13Rf) connectés auxdits premier et second orifices de distribution d'admission côté intérieur (12Lb, 12Rb).

4. Moteur à combustion interne de type horizontal à cylindres opposés muni d'un système d'admission selon la revendication 3, dans lequel
lesdits arbres de soupape (15La, 15Ra) desdites soupapes d'étranglement (14La, 14Ra) plus proches dudit filtre à air (10) sont connectés coaxialement l'un à l'autre, et lesdits arbres de soupape (15Lb, 15Rb) desdites soupapes d'étranglement (14Lb, 14Rb) plus éloignées dudit filtre à air (10) sont connectés coaxialement l'un à l'autre.

5. Moteur à combustion interne de type horizontal à cylindres opposés muni d'un système d'admission selon la revendication 3, dans lequel
lesdits arbres de soupape (15La, 15Lb) desdites soupapes d'étranglement (14La, 14Lb) dans lesdits premiers tuyaux d'admission (13Lf, 13Lr) sont connectés coaxialement l'un à l'autre, et lesdits arbres de soupape (15Ra, 15Rb) desdites soupapes d'étranglement (14Ra, 14Rb) dans lesdits seconds tuyaux d'admission (13Rf, 13Rr) sont connectés coaxialement l'un à l'autre.

6. Moteur à combustion interne de type horizontal à cylindres opposés muni d'un système d'admission selon l'une quelconque des revendications 1 à 5, dans lequel
ladite première rangée (7L) est décalée (S) par rapport à ladite seconde rangée (7R) vers le côté opposé dudit filtre à air (10) le long de la ligne axiale (A) dudit vilebrequin (1), et ladite ligne centrale (Y) est décalée (L) par rapport à ladite ligne axiale (A) dudit vilebrequin (1) vers le côté de ladite première rangée (7L).
